(19) Europäisches Patentamt
European Patent Office
Office européen des brevets

(11) Veröffentlichungsnummer: **0 107 764**
**B1**

(12) # EUROPÄISCHE PATENTSCHRIFT

(45) Veröffentlichungstag der Patentschrift: **18.03.87**

(51) Int. Cl.⁴: **C 08 F 20/12**, C 08 F 2/44

(21) Anmeldenummer: **83108800.0**

(22) Anmeldetag: **07.09.83**

(54) **Giessharze auf Basis von Acrylsäureestern.**

(30) Priorität: **05.10.82 DE 3236814**
**31.08.83 DE 3331371**

(43) Veröffentlichungstag der Anmeldung:
**09.05.84 Patentblatt 84/19**

(45) Bekanntmachung des Hinweises auf die Patenterteilung:
**18.03.87 Patentblatt 87/12**

(84) Benannte Vertragsstaaten:
**AT BE CH DE FR GB IT LI NL SE**

(56) Entgegenhaltungen:
**DE-A-1 745 119**
**FR-A-2 273 040**

(73) Patentinhaber: **DYNAMIT NOBEL AKTIENGESELLSCHAFT, Postfach 1209, D-5210 Troisdorf, Bez. Köln (DE)**

(72) Erfinder: **Hanisch, Horst, Dr., Fröbelweg 19, D-5202 Hennef/Sieg (DE)**
Erfinder: **Lenz, Theo, Frankfurterstrasse 72, D-5200 Siegburg (DE)**
Erfinder: **Bernhardt, Günther, Dr., Rheinstrasse 33, D-5205 St. Augustin- Niederberg (DE)**

**EP 0 107 764 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Gegenatand der vorliegenden Erfindung sind Gießharze auf der Basis von hartbaren Acryl- und Methacrylsäuerestern und feinteiligen, anorganischen Füllstoffen, die als Haftvermittler Organosiliciumverbindungen enthalten.

Es ist bekannt, Gießharze auf Basis von härtbaren Acryl- und Methacrylsäureestern, die im folgenden auch als ungesättigte Gießharze bezeichnet werden, anorganische Füllstoffe unterzumischen. Es sind weiterhin auch solche Gießharze bekannt, die die anorganischen Füllstoffe in Anteilen über 50 % enthalten, wobei diese Füllstoffe besonders feinteilig sein sollen. Bei den zuletzt genannten Gießharzen ist u. a. auch die Verwendung von Organosilanen als Haftvermittler bereits beschrieben (vgl. DE-OS 24 49 656). Dies bekannten, feinteilige Füllstoffe enthaltenen Gießharze haben gegenüber ungefüllten ungesättigten Gießharzen höhere Dichten, eine höhere Härte und verbesserte Steifigkeit.

Weiterhin setzten die anorganischen Füllstoffe die Erwärnung der Harze während der Aushärtung sowie ihre Schrumpfung herab.

Der hohe Anteil an feinteiligen Füllstoffen, die unter Mitverwendung von Organosilanen als Haftvermittler gleichmäßig verteilt in diesen Gießharzen vorliegen, erhöht die Biegefestigkeit und Schlagzähigkeit der aus diesen Harzen hergestellten Formkörper. Zu den Formkörpern, die aus diesen bekannten, ungesättigten Gießharzen hergestellt werdsn, zählen u.a. Sanitärartikel, z.E. Spülen oder Waschbecken.

Bei der Herstellung dieser Formkörper soll das ungesättigt Gießharz eine möglichst geringe Viskosität besitzen, damit beim Füllen der Formen diese möglichst formgenau ausgefüllt und der notwendige Füllgrad erhalten werden kann. Aufgrund des hohen Anteils an Füllstoffen wird diese Forderung von vielen ungesättigten Gießharzen nicht erfüllt. Auch durch den Zusatz von Organosiliciumverbindungen kann, dieses Problem nicht gelöst werden; einige Organosiliciumverbindungen bewirken sogar noch eine zusätzliche Erhöhung der Viskosität.

Es bestand deshalb die Aufgabe, die bekannten ungesättigte Gießharze auf Basis von Acrylsäureestern und feinteiligen anorganischen Füllstoffen, die als Haftvermittler Organosiliciumverbindungen enthalten, derart zu verbessern, daß sie eine für die Verfarbeitung notwendige Viskosität besitzen, die möglichst geringer ist als die Viskosität der unmodifizierten Gießharze. Die neuen Gießharze sollen dabei aber auch die gleichen guten physikalischen Werte besitzen, wie die bekannten ungesättigten Gießharze.

In Erfüllung dieser Aufgabe wurden nun Gießharze auf Basis von Acryl- und Methacrylsäureestern und feinteiligen anorganischen Füllstoffen, die als Haftvermittler Organosiliciumverbindungen enthalten, dadurch gekennzeichnet, daß die Organosiliciumverbindung eine oder mehrere ethylenisch ungesättigte Gruppen besitzt und in Mengen zwischen 0,2 und 4 Gew.-%, bezogen auf die feinteiligen anorganischen Füllstoffe, in dem Harz enthalten ist und das Gießharz zusätzlich noch einen Metallsäureester von Metallen der IV. oder V. Nebengruppe des Periodischen Systems der Elemente in Mengen zwischen 0,05 und 1 Gew.-%, bezogen auf die feinteiligen anorganischen Füllstoffe, enthält und das Verhältnis von Metallsäureester : Orgsnosiliciunverbindung zwischen 1 : 10 und 10 : 2 liegt.

Die erfindungsgemäßen ungesättigten Gießharze besitzen überraschenderweise im unausgehärteten Zustand Viskositäte die beachtlich niedriger sind als die Viskositäten der analogen Gießharze ohne Zusatz der beanspruchten Komponenten. Wenn dagegen nur eine der Komponenten in dem gleichen Mengenanteil wie das beanspruchte Gemisch in dem Gießharz enthalten ist, erhält man nicht solche Gießharze mit den gleichen niedrigen Viskositätszahlen, die erhalten werden, wenn ein erfindungsgemäßes Gemisch eingesetzt wird. Es liegt hier also ein synergistischer Effekt zwischen diesen beiden beanspruchten Verbindungsgruppen vor.

Dis einzusetzende Menge an Organosiliciumverbindung und Metallsäureester wird praktischerweise auf das in dem Gießharz enthaltende Füllmittel bezogen, dessen Gehalt in weiten Grenzen variierbar ist. Die Organosiliciunverbindung wird in Mengen zwischen 0,2 und 4-Gew.-% und der Metallsäureester in Mengen zwischen 0,05 und 1 Gew.-% eingesetzt.

Das Verhältnis von Metallsäureester zu Organosiliciumverbindung liegt zwischen 1 : 10 und 10 : 2. Der bevorzugte Bereich liegt zwischen 4 : 10 und 10 : 4.

Funktionelle Organosiliciumverbindungen mit einer ethylenisch ungesättigten Gruppe. die hier auch als ungesättigte Organosilane bezeichnet werden, sind solche Di- und Trialkoxysilane, deren organofunktioneller Rest eine CC-Doppelbindung enthält. Dieser Rest ist immer über ein Kohlenstoffatom mit dem Siliciumatom verbunden, wobei dieses Kohlenstoffatom bereits mit dem nächsten C-Atom mit einer Doppelbindung verknüpft sein kann, wie z.B. in den Vinyltrialkoxysilanen. Die CC-Doppelbindung kann jedoch auch über ein oder mehrere C Atome von dem Si-Atom getrennt sein, wie z.B. in den Allyltrialkoxysilanen oder den γ-Methacryloxypropyltrialkoxysilanen. Auch die korrespondierenden Dialkoxysilane können eingesetzt werden, wobei an dem Si-Atom entweder ein zweiter organofunktioneller Rest mit einer CC-Doppelbindung (der im allgemeinen der gleiche Rest wie der erste organofunktionelle Rest ist) oder ein Alkylrest mit vorzugsweise 1 bis 4 C-Atomen gebunden ist. Die Alkoxygruppe der ungesättigten Organosilane hat vorzugsweise 4 C-Atome, deren Kohlenstoffkette ggf. durch ein Ethersauerstoffatom unterbrochen sein kann.

Beispiele für solche ungesättigten Organosilane sind: Vinyltrimethoxysilan, Vinyltriethoxysilan, Vinyltris(methoxyethoxy)-silan, Divinyldimethoxysilan, Vinylmethyldimethoxysilan, γ-Methacryloxypropyltrimethoxysilan oder γ-Methacryloxypropyltris(methoxyethoxy)-silan.

Organosiliciumverbindungen mit mehreren ungesättigten Gruppen, die hier als ungesättigte polymere Organosilane bezeichnet werden, sind erfindungsgemäß Copolymere aus mehreren ethylenisch ungesättigten

Verbindungen. Sie enthalten mindestens zwei verschiedene Grundbausteine mit jeweils zwei Ketten-C-Atomen, wobei einer der Grundbausteine mit einer Alkoxysilylgruppierung verknüpft ist, die entweder direkt oder über eine

$$-\underset{\underset{O}{\|}}{C}$$

- 0 - $(CH_2)_3$- Gruppe mit dem Grundbaustein verbunden ist und der andere Grundbaustein einen $\alpha$-Halogencarbonsäurerest enthält, dessen Halogenatom durch einen Acryl- oder Methacrylsäurerest substituiert ist. Zusätzlich kann das Copolymere auch Grundbausteine mit ethylenisch ungesättigten Gruppen enthalten, die keine funktionellen Gruppen besitzen. Die Herstellung dieser Verbindungen wird in der DE-OS 32 27 552 (& EPA-A- 101 541) beschrieben, auf die hier besonders verwiesen wird.

Die einsetzbaren Metallsäureester umfassen die Ester der Metallsäuren der Verbindungen der IV. oder V Nebengruppe des Periodischen Systems der Elemente, hauptsächlich Titan- Zirkon- und Vanadinsäureester Die Esterkomponente kann dabei 1 bis 18 C-Atome betragen und sich sowohl von aliphatischen Alkoholen als auch von, ggf. alkylsubstituierte Phenolen ableiten; auch gemischte Ester können eingesetzt werden. Zu diesen erfindungsgemäß einsetzbaren Verbindunge zählen u. a. Methyltitanat, Ethyltitanat, Butyltitanat, Butylpolytitanat, Nonyltitanat, Cetyltitanat, Tributyloleyltitanat, Kresyltitanat, Kresylpolytitanat, Propylzirkonat, Butylzirkonat, Ethylvanadat und Butylvanadat.

Aus dieser Aufstellung geht auch hervor, daß die entsprechenden polymeren Ester eingesetzt werden können, sofern diese beständig sind. Als gemischte Ester können auch solche eingesetzt werden, bei denen eine oder mehrere Alkoxygruppen durch einen Komplexbildner, z.B. Acetylaceton oder Acetessigsäureester ersetzt sind, wie z.B. beim Di-isopropoxy-bis(2,4-pentandionato)-titan (IV), das auch unter der Bezeichnung Titanacetylacetonat bekannt ist. Auch andere Metallsäure-Komplexverbindungen, die keine Estergruppierungen mehr enthalten, lassen sich einsetzen, wie z.B. Tris-(2,4-pentandionato)-vanadium (III) oder Oxybis-(2,4-pentandionato)-vanadium (IV).

Bevorzugt werden Metallsäureester mit geringer Eigenfarbe eingesetzt.

Die Harzkomponente des erfindungsgemäßen ungesättigten Gießharzes ist ein härtberes Acrylharz, wobei unter einem Acrylharz flüssige Polymere der, ggf. in $\alpha$-Stellung methyl- oder ethylsubstituierten, Acrylsäureester verstanden werden sollen. Die Esterkomponente kann dabei von aliphatischen oder aromatischen Alkoholen mit 1 bis 18 Kohlenstoffatomen abgeleitet und ggf. durch ein Ethersauerstoffatom unterbrochen sein. Diese flüssigen Polymere können ggf. ein weiteres festes, nicht mehr vernetzendes Polymeres aus der gleichen gruppe gelöst oder dispergiert enthalten. Für mittelreaktive bei der Härtung nicht vernetzender Harze ist das Methylmethacrylat der bevorzugte Ester. Hochreaktive bei der Härtung vernetzender Harze enthalten vernetzbare Bestandteile, wie Ethylenglykoldimethacrylat, weiterhin Methacrylate des Butendiols oder des Allylalkohols.

Solche Harze oder Harzgemische, die als Komponenten für Gießmassen eingesetzt werden können, sind an sich bekannt (vgl. DE-OS 24 49 656).

Die Härtung dieser Harze oder Harzgemische erfolgt ebenfalls auf an sich bekannte Weise, z.B. durch Zusatz von anorganischen Peroxiden und ggf. Aktivatoren oder Beschleunigern, je nachdem, ob die Härtung bei erhöhter Temperatur oder Raumtemperatur durchgeführt werden soll.

Das Gießharz enthält ferner Füllstoffe in Form von feinverteilten Partikelchen, deren Korngröße maximal 100 µm beträgt. Die bevorzugten Korngrößenbereiche liegen zwische 0 bis 10, 0 bis 40 und 0 bis 60 µm; eine besonders gute Wirksamkeit zeigt das erfindungsgemäße Gemisch bei Füllstoffen im Korngrößenbereich zwischen 0 und 10 µm. Der Füllstoff kann natürlicher oder sgnthetischer Provenienz sein; er sollte eine, dem Anwendungszweck angepaßte, Härte besitzen. Füllstoffe natürlicher Provenienz sind z.B. Mineralien wie Aluminiumoxide, Doppeloxide des Aluminiums mit Alkali- und/oder Erdalkalimetallen, Siliciumdioxid in seinen verschiedenen Modifikationen, Silikate, Aluminosilikate, Calcit und andere Carbonate, Carbide, Oxide und Sulfide. Dies Stoffe können auch durch anschließende Verarbeitungsprozesse modifiziert sein. Als Beispiel für diese Füllstoffe seien genannt: Quarzmehl, Kaolin, Talcum, Glimmer, Tonerde, Zinkweiß, Kreide, Kalkstein, Dolomit, Gips und Blancfix. Beispiele für synthetisch hergestellte Füllstoffe sind Glasmehl, Schlackenasche, feinverteiltes synthetisches $SiO_2$.

Die erfindungsgemäß modifizierten Gießharze enthalten mindestens 20 Gew.-% dieser Füllstoffe. Ihr Anteil kann maximal bei 80 Gew.-% liegen. Vorzugsweiae liegt der Anteil der Füllstoffe in dem fertigen Gießharz zwischen 50 und 70 Gew.-%.

Aufgrund der Anwesenheit des erfindungsgemäßen Gemisches aus ungesättigter Organosiliciumverbindung und Metallsäureestern ist die Mitverwendung eines Dispergiermittels, wie sie in der DE-OS 24 49 656 zur Herstellung der dort allgemein beschriebenen Gießharze zwingend vorbeschrieben ist, nicht notwendig. Die Füllstoffe liegen in dem ungesättigten flüssigen Gießharz gleichmäßig verteilt, frei von Aggregation, vor, wenn dieses Harz ansonsten nach den bekannten Verfahren hergestellt wurde.

Wie die bekannten flüssigen, Füllstoffe enthaltenden, Gießharze können die erfindungsgemäßen Gießharze zusätzlich zu den Füllstoffen noch faserförmige Verstärkerstoffe enthalten, die die Bedingungen der Feinkörnigkeit nicht zu erfüllen brauchen. Zu diesen Faserstoffen zählen beispielsweise Glasfasern, Steinfasern

oder Asbest. Der Anteil dieser Verstärkerstoffe soll maximal jedoch nicht größer sein als der Anteil der feinkörnigen Füllstoffe.

Falls erwünscht, können die erfindungsgemäßen Gießharze mit Pigmenten und/oder Farbstoffen eingefärbt werden. Hierfür verwendet man vorteilhaft solche Produkte, die gegenüber Vergilbung, Verkokung und Vercrackung beständig sind. Beispielhaft seien genannt: Eisenoxide, Titandioxid, Blancfix, Zinkweiß, Ultramarinblau und Ruß.

Die Herstellung der erfindungsgemäßen flüssigen härtbaren Gießharze erfolgt in an sich bekannter Weiae, wie sie z.B. in der DE-OS 24 49 656 beschrieben ist. Im allgemeinen werden zuerst die erfindungsgemäßen Zusätze dem flüssigen ungesättigtem Harz untergemischt und anschließend die Füllstoffe und ggf. die Verstärkerstoffe in das erhaltene Gemisch eindispergiert. Das vorgelegte Harz kann dabei bereits den Härtungskatalysator untergemischt enthalten, besonders wenn das Gießharz durch Wärmeeinwirkung ausgehärtet werden soll. Es ist jedoch zweckmäßig, den Härtungskatalysator und ggf. die Beschleuniger erst kurz vor dem Aushärten der Masse unterzumischen und daraufhin das gewünschte Gußstück herzustellen.

Von den erfindungsgemäßen Massen lassen sich beispielsweise Sanitärartikel, wie Waschbecken, Brausetassen, Spülen oder WC-Becken oder Formkörper für die Bauindustrie, wie Maschinenfundamente, Maschinenbetten oder Behälter herstellen.

**Beispiele 1 bis 4**

Die Gießmassen, deren Eigenschaften in den Tabellen 1 bis 4 angegeben sind, wurden alle in der gleichen Weise hergestellt: Es wurde jeweils ein Gemisch aus 32 g eines hochreaktiven Methacrylatharzes (Handelsprodukt Plexit® der Firma Röhm GmbH, Darmstadt) mit 16 g Methylmethacrylat in einem Meßgefäß vorgelegt und diesem Gemisch die den Tabellen genannten Mengen an ungesättigtem Organosilan und Metallsäureester eingemischt. Anschließend wurde unter Verwendung eines Körbchenrührers bei 700 bis 800 U/min im Verlauf von 8 bis 10 Minuten insgesamt 72 g einea Quarzfeinmehls (Korngrößenbereich 0 bis 40μm) eindispergiert.

In den Tabellen 1 bis 4 ist die Viskosität der erhaltenen Massen angegeben. Diese ist für die erfindungsgemäßen Massen geringer als für solche Massen, die entweder nur das ungesättigte Organosilan oder nur den Metallsäureester enthalten. Die Tabellen zeigen weiterhin, daß bereits bei einem geringen Zusatz der jeweils 2. Komponente des Gemischs ein synergistischer Effekt eintritt, dessen optimal Wirkung bei unterschiedlichen Mischungsverhältnissen eintritt, je nachdem, welcher Metallsäureester eingesetzt wurde.

Die Bestimmung der Viskosität erfolgte in diesen und in de folgenden Beispielen mit Hilfe eines Brookfield RV-Viskosimeters. Dazu wurden die einzelnen Harzproben jeweils auf 20°C temperiert und nach den angegebenen Lagerzeiten ausgeprüft. Die Messungen erfolgten mit Spindel 5 bei 10 und 50 U/min.

**Tabelle 1**

Viskosität von Quarzmehl-Methacrylatharz-Mischungen in Abhängigkeit von Methacryloxipropyltrimethoxisilan-Zirkonbutylat-Verhältnis

| Methacryloxipropyltrimethoxisilan (I)-Zirkonbutylat (II)-Mischung | | Viskosität [mPa.s] | | | |
|---|---|---|---|---|---|
| | | 10 U/min | | 50 U/min | |
| I [%] | II [%] | 1 h | 24 h | 1 h | 24 h |
| - | - | 15000 | 13900 | 6200 | 6000 |
| 0,5 | - | 16400 | 13300 | 6700 | 5700 |
| 0,45 | 0,05 | 10800 | 6700 | 5400 | 3900 |
| 0,40 | 0,10 | 8400 | 5600 | 5000 | 3800 |
| 0,35 | 0,15 | 6400 | 4600 | 3900 | 3100 |
| 0,3 | 0,2 | 5800 | 4300 | 4000 | 3200 |
| 0,25 | 0,25 | 5700 | 4000 | 3900 | 3100 |
| 0,20 | 0,30 | 4500 | 3800 | 3500 | 2900 |
| 0,15 | 0,35 | 4300 | 4000 | 4400 | 3000 |
| 0,10 | 0,40 | 4300 | 4000 | 3500 | 3200 |
| 0,05 | 0,45 | 4800 | 4000 | 3800 | 3200 |
| - | 0,5 | 5600 | 4600 | 4200 | 3500 |
| - | 0,3 | 6800 | 5600 | 5200 | 4400 |
| - | 0,2 | 11600 | 8800 | 6200 | 5100 |
| - | 0,1 | 13600 | 11800 | 7000 | 6000 |

**Tabelle 2**

Viskosität von Quarzmehl-Methacrylatharz-Mischungen in Abhängigkeit vom Methacryloxipropyltrimethoxisilan-Tetrabutyltitanat-Verhältnis

| Methacryloxipropyltrimethoxisilan (I)-Tetrabutyltitanat (II)-Mischung | | Viskosität [mPa.s] | | | |
|---|---|---|---|---|---|
| | | 10 U/min | | 50 U/min | |
| I [%] | II [%] | 1 h | 24 h | 1 h | 24 h |
| 0,5 | - | 12000 | 11300 | 5200 | 4900 |
| 0,4 | 0,1 | 7200 | 5300 | 4000 | 3200 |
| 0,3 | 0,2 | 6600 | 5100 | 3800 | 2900 |
| 0,2 | 0,3 | 6000 | 5200 | 3800 | 3100 |
| - | 0,5 | 8000 | 8000 | 4100 | 4000 |
| - | - | 11600 | 11200 | 5200 | 4900 |

**Tabelle 3**

Viskosität von Quarzmehl-Methacrylatharz-Mischungen in Abhängigkeit von Vinyltrimethoxysilan-Zirkonbutylat-Verhältnis

| Vinyltrimethoxysilan (I)-Zirkonbutylat (II)-Mischung | | Viskosität [mPa.s] | | | |
|---|---|---|---|---|---|
| | | 10 U/min | | 50 U/min | |
| I [%] | II [%] | 1 h | 24 h | 1 h | 24 h |
| 0,5 | - | 10200 | 11800 | 4700 | 5300 |
| 0,4 | 0,1 | 9400 | 8000 | 4200 | 4700 |
| 0,3 | 0,2 | 10200 | 8000 | 5000 | 4200 |
| 0,2 | 0,3 | 9800 | 7800 | 4600 | 4100 |
| - | - | 11600 | 11100 | 5200 | 4900 |

**Tabelle 4**

Viskosität von Quarzmehl-Methacrylatharz-Mischungen in Abhängigkeit von Vinyltrimethoxysilan-Tetrabutyltitanat-Verhältnis

| Vinyltrimethoxysilan (I)-Tetrabutyltitanat (II)-Mischung | | Viskosität (mPa.s) | | | |
|---|---|---|---|---|---|
| | | 10 U/min | | 50 U/min | |
| I [%] | II [%] | 1 h | 24 h | 1 h | 24 h |
| 0.5 | - | 10200 | 11800 | 4700 | 5300 |
| 0,4 | 0.1 | 8400 | 3600 | 4500 | 2800 |
| 0.3 | 0.2 | 6000 | 4200 | 3700 | 3000 |
| 0.2 | 0.3 | 6400 | 5400 | 3700 | 3200 |
| - | - | 11600 | 11100 | 5200 | 4900 |

**Beispiel 5**

Die Verfahrensweisen der Beispiele 1 bis 4 wurden wiederholt mit dem Unterschied, daß anstelle des hochreaktiven Methacrylatharzes ein mittelreaktives Methacrylatharz eingesetzt wurde, das unter dem Namen Plexit®M 60 (Verkaufsprodukt von Röhm GmbH , Darmstadt) im Handel erhältlich ist.

Die Versuche wurden mit wechselnden Mengen an γ-Methacryloxypropyltrimethoxysilan (MEMO) und Zirkonbutylat [$Zr(Obut)_4$] durchgeführt. Die Meßergebnisse gehen aus Tabelle 5 hervor; sie zeigen, daß auch bei einem weniger reaktiven Acrylatharz der oben dargelegte synergistische Effekt eintritt, und daß das Optimum des Mischungsverhältnisses der erfindungsgemäßen Zusätze von den eingesetzten Harztypen abhängig ist.

**Tabelle 5**

Viskosität von Quarzmehl-Methacrylatharz-Mischungen in Abhängigkeit von Methacryloxipropyltrimethoxisilan-Zirkonbutylat-Verhältnis

| MEMO [%] | Zr(O but)$_4$ [%] | Viskosität [mPa.s] 10 U/min 1 h | 10 U/min 24 h | 50 U/min 1 h | 50 U/min 24 h |
|---|---|---|---|---|---|
| - | - | 11400 | 11500 | 4900 | 4900 |
| 0,5 | - | 10500 | 10400 | 4400 | 4500 |
| 0,45 | 0,05 | 9000 | 8600 | 4100 | 4200 |
| 0,40 | 0,1 | 7800 | 7200 | 3800 | 3700 |
| 0,35 | 0,15 | 4200 | 5800 | 3200 | 3200 |
| 0,3 | 0,2 | 6000 | 5500 | 3200 | 3200 |
| 0,25 | 0,25 | 7200 | 6400 | 3900 | 3500 |
| 0,20 | 0,30 | 9300 | 6700 | 3800 | 3600 |
| 0,15 | 0,35 | 9400 | 7900 | 4100 | 3900 |
| 0,10 | 0,40 | 9800 | 8300 | 4600 | 4100 |
| 0,05 | 0,45 | 11400 | 9000 | 5000 | 4200 |
| - | 0,5 | 10800 | 10800 | 4900 | 4900 |
| - | 0,3 | 10500 | 9900 | 4800 | 4600 |
| - | 0,2 | 10600 | 11300 | 5100 | 5000 |
| - | 0,1 | 12300 | 11400 | 5300 | 4900 |

**Beispiel 6**

Es wurden mehrere Gießmassen jeweils in der gleichen Weise unter Verwendung eines ungesättigten polymeren Organosilans wie folgt hergestellt:

Es wurde jeweils ein Gemisch aus 105 g eines hoch-reaktiven Methmcrylat-Harzes (Handelsprodukt Plexit® der Firma Röhm GmbH, Darmstadt) mit 35 g Methylmethacrylat in einem Meßgefäß vorgelegt und in diese Lösung die in der Tabelle 6 genannten Mengen an ungesättigtem polymeren Organosilan -gegebenenfalls im Gemisch mit einer Mischung aus 1 Mol Titanbutylat und 4 Mol Acetessigsäureester (in der Tabelle mit MEMIG bezeichnet - eingemischt. Anschließend wurde unter Verwendung eines Körbchen-Rührers bei 2000 U/min im Verlauf von ca. 10 Min. zunächst 210 g eine Quarz-Feinmehls (Korngrößenbereich 0 - 40 µm) und daraufhin 1,4 g Ultramarinblau-Pigment (Handelsprodukt der Firma Reckitt's Colours S.A. Comines/Frankreich) eindispergiert.

In Tabelle 6 ist die Viskosität der enthaltenen Massen angegeben. Diese ist für die erfindungsgemäßen Massen geringe als für solche Massen, die entweder nur das ungesättigte polymere Organosilan oder nur den Metallsäureester enthalten. Diese Aussage gilt in vollem Umfang auch beim Einsatz von solchen ungesättigten polymeren Organosilanen, die auch ohne Zusatz von Metallsäureestern viskositätserniedrigend wirken.

Die Bestimmung der Viskosität erfolgte mit einem Brookfield-RV-Viskosimeter. Dazu wurden die einzelnen Proben jeweils auf 20°C temperiert und nach den angegebenen Lagerzeiten ausgeprüft. Die Messungen erfolgtem mit Spindel 5 bei 10 und 50 U/min.

**Tabelle 6**

Viskosität von pigmentierten Quarzmehl-Methacrylatharz-Mischungen

| Probe Nr. | UPO1 Gew.-% | UPO 2 Gew.-% | MEMIG Gew.-% | Viskosität [m Pa · s] 10 U/min 2 h | 10 U/min 24 h | 50 U/min 2 h | 50 U/min 24 h |
|---|---|---|---|---|---|---|---|
| a) | - | - | - | 11200 | 11200 | 5900 | 6000 |
| b) | 0,5 | - | - | 11200 | 6000 | 6800 | 4600 |
| c) | 0,4 | - | 0,1 | 4200 | 3600 | 3800 | 3700 |
| d) | - | 0,5 | - | 5200 | 3800 | 4000 | 3600 |
| e) | - | 0,4 | 0,1 | 3000 | 2800 | 3200 | 3200 |

Erläuterungen zu Tabelle 6:

UPO 1 = ungesättigtes polymeres Organosilan = Umsetzungsprodukt aus Natriumacrylat und einem Polymerisat, das hergestellt wurde aus

90 Gew.-Teilen Vinylacetat
5 Gew.-Teilen Vinylchloracetat und
5 Gew.-Teilen Vinyltrimethoxysilan
eingesetzt als ca. 43 %ige Lösung in Toluol.

UPO 2 = ungesättigtes polymeres Organosilan = Umsetzungsprodukt aus Natriumacrylat und einem Polymerisat, das hergestellt wurde aus

85 Gew.-Teilen Vinylacetat
5 Gew.-Teilen Vinylchloracetat
10 Gew.-Teilen Vinyltrimethoxysilan
eingesetzt als ca. 43 %ige Lösung in Toluol.

**Beispiel 7**

Es werden 140 g des im Beispiel 1 genannten hochreaktiven Methacrylatharzes, das im Verhältnis 3 : 1 mit Methylmethacrylat verdünnt wurde, in einem Reaktionsgefäß vorgelegt, daraufhin 1,68 g γ-Methacryloxypropyltrimethoxysilan und 0,42 g Zirkonisobutylat untergemischt und in das Gemisch 210 g feinkörniges Quarzmehl (Korngrößenbereich 0 bis 40 µm) eindispergiert. Anschließend wird das Gemisch während 10 Min. bei 2000 U/min geröhrt.

Nach einer Entlüftungszeit von etwa 16 Stunden werden jeweils 0,7 g eines für das Acrylharz spezifischen Peroxid-Katalysators und eines Aktivators eingerührt und aus dem Gemisch Platten der Abmessungen 200 x 200 x 4 mm gegossen. Die Platten härten innerhalb 20 Min. aus. Anschließend wurden sie noch 14 Stunden bei 80 C nachgehärtet.

Zur Bestimmung der in der Tabelle 6 aufgeführten Schlag- und Biegefestigkeit wurden aus den erhaltenen Platten Normkörper der Abmessungen 50 x 6 x 4 mm ausgesägt.

Die erhaltenen physikalischen Werte gehen aus der Tabelle hervor.

**Tabelle 7**

| | Biegefestigkeit [N/mm²] nach DIN 53 452 | | Schlagzähigkeit [kJ/m²] nach DIN 53 453 | |
|---|---|---|---|---|
| | direkt | nach 6 h Kochen | direkt | nach 6 h Kochen |
| Nullprobe | 56 | 47 | 1,9 | 1,8 |
| Beispiel 6 | 92 | 111 | 2,8 | 4,2 |
| Vergleichs-beispiel | 71 | 99 | 2,9 | 3,8 |

Als Vergleichsbeispiel dienten Platten, die in gleicher Weise hergestellt wurden, jedoch anstelle des Gemischs aus Methacrylsilan und Zirkonisobutylat die gleiche Menge γ-Methacryloxypropyltrimethoxysilan enthielten.

**Beispiel 8**

In die Proben des Beispiels 6 wurden nach einer Entlüftungszeit von etwa 16 Stunden jeweils 0,7 g eines für das Acrylharz spezifischen Peroxydkatalysators und eines Aktivators eingerührt und aus dem Gemisch Platten der Abmessungen 200 x 200 x 4 mm gegossen. Die Platten härteten innerhalb 20 Minuten aus. Anschließend wurden sie noch 14 Stunden bei 80° C nachgehärtet.

Zur Bestimmung der Biegefestigkeit und Schlagzähigkeit wurden aus den erhaltenen Platten Normkörper der Abmessungen 50 x 6 x 4 mm ausgesägt. Die physikalischen Wert dieser Prüfkörper sind in Tabelle 8 angegeben.

| Probe Nr. * | | Biegefestigkeit [N/mm²] DIN 53452 | | Schlagzähigkeit [kJ/m²] DIN 53453 | |
|---|---|---|---|---|---|
| | | Direkt | nach 6h Kochen | Direkt | nach 6h Kochen |
| a) | 0-Probe | 67 | 54 | 20 | 16 |
| b) | Vergleichsbeispiel | 69 | 79 | 20 | 28 |
| c) | erfindungsgemäß | 100 | 103 | 44 | 44 |
| d) | Vergleichsbeispiel | 68 | 87 | 21 | 29 |
| e) | erfindungsgemäß | 111 | 102 | 40 | 39 |

* siehe Tabelle 6

**Patentansprüche** für die Vertragsstaaten BE, CH, DE, FR, GB, IT, LI, NL, SE

1. Gießharze auf Basis von fließfähigen härtbaren Acryl- und Methacrylsäureestern und feinteiligen anorganischen Füllstoffen, die als Haftvermittler Organosiliciumverbindungen enthalten, dadurch gekennzeichnet, deß die Organosiliciumverbindung eine oder mehrere ethylenisch ungesättigte Gruppen besitzt und in Mengen zwischen 0,2 und 4 Gew.-%, bezogen auf die feinteiligen anorganischen Füllstoffe, in dem Herz enthalten ist und das Gießharz zusätzlich noch einen Metellsäureester von Metellen der IV. oder V. Nebengruppe des Periodischen Systems der Elemente in Mengen zwischen 0,05 und 1 Gew.-%, bezogen euf die feinteiligen anorganischen Füllstoffe, enthält und das Verhältnis von Metallsäureester : Organosiliciumverbindung zwischen 1 : 10 und 10 : 2 liegt.

2. Gießharze gemäß Anspruch 1, dadurch gekennzeichnet, daß sie als Organosiliciumverbindung mit einer ethylenisch ungesättigten Gruppe γ-Methacryloxypropyltrialkoxysilane enthalten.

3. Gießharze gemäß Anspruch 1, dadurch gekennzeichnet, daß sie als Organosiliciumverbindungen mit einer ethylenisch ungesättigten Gruppe Vinyltrialkoxysilane enthalten.

4. Gießharze gemäß Anspruch 1, dadurch gekennzeichnet, daß sie enthalten als Organosiliciumverbindung mit mehreren ethylenisch ungesättigten Gruppen ein Umsetzungsprodukt aus Salzen der (Meth)acrylsäure mit Copolymerisaten aus

a) Vinylchloracetat

und

b) Alkoxysilylverbindungen mit einem Vinyl- oder Methacryloxypropylrest, die gegebenenfalls weitere nicht funktionelle Grundbausteine mit ethylenisch ungesättigten Gruppierungen einpolymerisiert enthalten.

5. Gießharze gemäß einem der Ansprüche 1 bis 4, dadurch gekennzeichnet, daß sie als Metallsäureester Ester von Verbindungen aus der Gruppe Titansäure, Vanadinsäure und Zirkonsäure enthalten.

6. Gießharze gemäß einem der Ansprüche 1 bis 5, dadurch gekennzeichnet, daß sie das Organosilan in Anteilen von 0,4 bis 1,2 Gew.-%, bezogen auf die feinteiligen anorganischen Füllstoffe, enthalten.

7. Gießharze gemäß einem der Ansprüche 1 bis 6, dadurch gekennzeichnet, daß sie den Metallsäureester in Anteilen von 0,1 bis 0,6 Gew.-%, bezogen die feinteiligen anorganischen Füllstoffe, enthalten.

**Patentansprüche** für den Vertragsstaat AT

1. Stabiles, fließfähiges, form- und härtbares Gemisch aus fließfähigen härtbaren Acryl- und Methacrylsäureestern und feinteiligen anorganischen Füllstoffen, das als Haftvermittler Organosiliciumverbindungen enthält, dadurch gekennzeichnet, daß die Organosiliciumverbindung eine oder mehrere ethylenisch ungesättigte Gruppen besitzt und in Mengen zwischen 0,2 und 4 Gew.-%, bezogen auf die feinteiligen anorganischen Füllstoffe, in dem Gemisch enthalten ist und das Gemisch zusätzlich noch einen Metallsäureester von Metallen der IV. oder V. Nebengruppe des Periodischen Systems der Elemente in Mengen zwischen 0,05 und 1 Gew.-%, bezogen auf die feinteiligen anorganischen Füllstoffe enthält und das Verhältnis von Metallsäureester : Organosiliciumverbindung zwischen 1 : 10 und 10 : 2 liegt.

2. Gemisch gemäß Anspruch 1, dadurch gekennzeichnet, daß es als Organosiliciumverbindung mit einer ethylenisch ungesättigten Gruppe γ-Methacryloxypropyltrialkoxysilane enthält.

3. Gemisch gemäß Anspruch 1, dadurch gekennzeichnet, daß es als Organosiliciumverbindungen mit einer ethylenisch ungesättigten Gruppe Vinyltrialkoxysilane enthält.

4. Gemisch gemäß Anspruch 1, dadurch gekennzeichnet, daß es enthält als Organosiliciumverbindung mit mehreren ethylenisch ungesättigten Gruppen ein Umsetzungsprodukt aus Salzen der (Meth)acrylsäure mit Copolymerisaten aus

a) Vinylchloracetat

und

b) Alkoxysilylverbindungen mit einem Vinyl- oder Methacryloxypropylrest, die gegebenenfalls weitere nicht funktionelle Grundbausteine mit ethylenisch ungesättigten Gruppierungen einpolymerisiert enthalten.

5. Gemisch gemäß einem der Ansprüche 1 bis 4, dadurch gekennzeichnet, daß es als Metallsäureester Ester von Verbindungen aus der Gruppe Titansäure, Vanadinsäure und Zirkonsäure enthält.

6. Gemisch gemäß einem der Ansprüche 1 bis 5, dadurch gekennzeichnet, daß es das Organosilan in Mengen von 0,4 bis 1,2 Gew.-%, bezogen auf die feinteiligen anorganischen Füllstoffe, enthält.

7. Gemisch gemäß einem der Ansprüche 1 bis 6, dadurch gekennzeichnet, daß es den Metallsäureester in Mengen von 0,1 bis 0,6 Gew.-%, bezogen auf die feinteiligen anorganischen Füllstoffe, enthält.

**Claims** for the Contracting States BE, CH, DE, FR, GB, IT, LI, NL, SE

1. Casting resins based on flowable hardenable acrylic and methacrylic acid esters and finely divided inorganic fillers, which contain organosilicon compounds as bonding agents, characterised in that the organosilicon compound possesses one or several ethylenically unsaturated groups and is contained in the resin in amounts between 0.2 and 4% by weight related to the finely divided inorganic filler and the casting resin additionally contains a metal acid ester of metals of the IVth or Vth sub-groups of the Periodic System of the elements in amounts between 0.05 and 1% by weight related to the finely divided inorganic filler and the ratio of metal acid ester:organosilicon compound lies between 1:10 and 10:2.

2. Casting resins according to claim 1, characterised in that they contain γ-methacryloxypropyltrialkoxy silanes as organosilicon compounds with one ethylenically unsaturated group.

3. Casting resins according to claim 1, characterised in that they contain vinyltrialkoxy silanes as organosilicon compounds with one ethylenically unsaturated group.

4. Casting resins according to claim 1, characterised in that they contain, as organosilicon compound with several ethylenically unsaturated groups, a reaction product of salts of (meth)acrylic acid with copolymers of

a) vinylchloroacetate and

b) alkoxysilyl compounds with a vinyl or methacryloxypropyl residue,

which optionally contain polymerised therein further non-functional fundamental structural units with ethylenically unsaturated groupings.

5. Casting resins according to one of claims 1 to 4, characterised in that they contain as metal acid esters, esters of compounds from the group titanic acid, vanadic acid and zirconic acid.

6. Casting resins according to claims 1 to 4, characterised in that they contain the organosilane in amounts of 0.4 to 1.2% by weight related to the finely divided inorganic fillers.

7. Casting resins according to one of claims 1 to 6, characterised in that they contain the metal acid esters in amounts of 0.1 to 0.6% by weight related to the finely divided inorganic fillers.

**Claims** for the Contracting State AT

1. Stable, flowable, mouldable and cross-linkable mixture of flowable, hardenable acrylic and methacrylic acid esters and finely divided inorganic fillers, which contains organosilicon compound as bonding agent, characterised in that the organosilicon compound possesses one or several ethylenically unsaturated groups and is contained in the mixture in amounts between 0.2 and 4% by weight related to the finely divided inorganic fillers and the mixture additionally contains a metal acid ester of metals of the IVth or Vth sub-groups

of the Periodic System of the elements in amounts between 0.05 and 1% by weight, related to the finely divided inorganic fillers, and the ratio of metal acid ester:organosilicon compound lies between 1:10 and 10:2.

2. Mixture according to claim 1, characterised in that it contains γ-methacryloxypropyltrialkoxy silanes as organosilicon compounds with one ethylenically unsaturated group.

3. Mixture according to claim 1, characterised in that it contains vinyltrialkoxy silanes as organosilicon compounds with one ethylenically unsaturated group.

4. Mixture according to claim 1, characterised in that it contains, as organosilicon compound with several ethylenically unsaturated groups, a reaction product of salts of (meth)acrylic acid with copolymers of

a) vinylchloroacetate and

b) alkoxysilyl compounds with a vinyl or methacryloxypropyl residue,

which optionally contain polymerised therein non-functional fundamental structural units with ethylenically unsaturated groupings.

5. Mixture according to one of claims 1 to 4, characterised in that it contains, as metal acid esters, esters of compounds from the group titanic acid, vanadic acid and zirconic acid.

6. Mixture according to one of claims 1 to 5, characterised in that it contains the organosilane in amounts of 0.4 to 1.2% by weight related to the finely divided inorganic fillers.

7. Mixture according to one of claims 1 to 6, characterised in that it contains the metal acid ester in amounts of 0.1 to 0.6% by weight related to the finely divided inorganic fillers.

**Revendications** pour les Etats contractants: BE, CH, DE, FR, GB, IT,

LI, NL, SE

1. Résines à couler à base d'esters durcissables, fluides, de l'acide acrylique et de l'acide méthacrylique, et de charges minérales finement divisées, qui contiennent comme promoteur d'adhérence des composés organosiliciques, caractérisérs en ce que le composé organosilicique possède un ou plusieurs groupes à insaturation éthylénique, et est contenu dans la résine en des quantités comprises entre 0,2 et 4 % en poids, par rapport aux charges minérales finement divisées, et que la résine à couler contient en outre encore un ester d'un acide métallique dérivant de métaux du IVème ou du Vème groupe secondaire du Tableau Périodique des Eléments, en des quantités comprises entre 0,05 et 1 % en poids, par rapport aux charges inorganiques finement divisées, et que le rapport ester d'acide métallique : composé organosilicique est compris entre 1:10 et 10:2.

2. Résines à couler selon la revendication 1, caractérisées en ce qu'elles contiennent comme composé organosilicique ayant un qroupe à insaturation éthylénique des γ-méthacryloxypropyltrialcoxysilanes.

3. Résines à couler selon la revendication 1, caractérisées en ce qu'elles contiennent comme composés orqanosiliciques ayant un groupe à insaturation éthylénique des vinyltrialcoxysilanes.

4. Résines à couler selon la revendication 1, caractérisées en ce qu'elles contiennent comme composé orgánosilicique ayant plusieurs groupes à insaturation éthylenique un produit de la réaction de sels de l'acide (méth)acrylique avec des copolymères

a) de chloracétate de vinyle, et

b) de composés alcoxysilyles ayant un radical vinyle- ou méthacryloxypropyle,

qui contiennent éventuellement, introduits dans la polymérisation, d'autres motifs non-fonctionnels ayant des groupements à insaturation éthylénique.

5. Résines à couler selon l'une des revendications 1 à 4, caractérisées en ce qu'elles contiennent comme esters d'acide métallique des esters de composés du groupe acide titanique, acide vanadique et acide zirconique.

6. Résines à couler selon l'une des revendications 1 à 5, caractérisées en ce qu'elles contiennent l'organosilane en des pourcentages de 0,4 à 1,2 % en poids, par rapport aux charges minérales finement divisées.

7. Résines à couler selon l'une des revendications 1 à 6, caractérisées en ce qu'elles contiennent l'ester d'acide métallique en des pourcentages de 0,1 à 0,6 % en poids, par rapport aux charges minérales finement divisées.

**Revendications** pour l'Etat contractant: AT

1. Mélange stable, fluide, façonnable et durcissable, d'esters durcissables et fluides de l'acide acrylique et de l'acide méthacrylique, et de charges minérales finement divisées, qui contient comme promoteur d'adhérence des composés organosiliciques, caractérisé en ce que le composé organosilicique possède un ou plusieurs groupes à insaturation éthylénique et est contenu dans le mélange en des quantités comprises entre 0,2 et 4 % en poids, par rapport aux charges minérales finement divisées, et que le mélange contiant en outre encore un ester d'un acide métallique, à base de métaux du IVème ou du Vème groupe secondaire du Tableau Périodique des Eléments, en des quantités comprises entre 0,05 et 1 % en poids, par rapport aux charges

minérales finement divisées, et que le rapport ester d'acide métallique : composé organosilicique est compris entre 1:10 et 10:2.

2. Mélange selon la revendication 1, caractérisé en ce qu'il contient comme composé organosilicique ayant un groupe à insaturation éthylénique des γ-méthacryloxypropyltrialcoxysilanes.

3. Mélanga selon la revendication 1, caractérisé en ce qu'il contient comme composés organosiliciques ayant un groupe à insaturation éthylénique des vinyltrialcoxysilanes.

4. Mélange selon la revendication 1, caractérisé en ce qu'il contient comme composé organosilicique ayant plusieurs groupes à insaturation éthylénique un produit de la réaction de sels de l'acide (méth)acrylique avec des copolymères

a) de chloracétate de vinyle, et

b) de composés alcoxysilyle ayant un radical vinyle ou méthacryloxypropyle,

qui contiennent, introduits dans la polymérisation, éventuellement d'autres motifs non-fonctionnels ayant des groupements à insaturation éthylénique.

5. Mélange selon l'une des revendications 1 à 4, caractérisé en ce qu'il contient comme esters d'acide métalliques des esters de composés du groupe acide titanique, acide vanadique et acide zirconique.

6. Mélange selon l'une des revendications 1 à 5, caractérisé en ce qu'il contient l'organosilane en des quantités de 0,4 à 1,2 % en poids, par rapport aux charges inorganiques finement divisées.

7. Mélange selon l'une des revendications 1 à 6, caractérisé en ce qu'il contient l'ester d'acide métallique en des quantités de 0,1 à 0,6 % en poids, par rapport aux charges inorganiques finement divisées.